# EUROPEAN PATENT SPECIFICATION

(11) **EP 3 128 876 B1**
(45) Date of publication and mention of the grant of the patent: **03.10.2018**
(21) Application number: 15741786.6
(22) Date of filing: 24.03.2015
(51) Int. Cl.: A47H 1/18, A47H 1/19

(54) **A CURTAIN WIRE FASTENING SYSTEM ONTO A WINDOW FRAME**
VORHANGDRAHTBEFESTIGUNGSSYSTEM EINES FENSTERRAHMENS
SYSTÈME DE FIXATION DE CÂBLE POUR RIDEAUX SUR UN ENCADREMENT DE FENÊTRE

(30) Priority: 09.04.2014 EE 201400022
(43) Date of publication of application: 15.02.2017
(73) Proprietor: SieOne OÜ, EE93817 Kuressaare (EE)
(72) Inventor: ULJAS, Ulvar, EE93814 Kuressaare (EE)
(74) Representative: Toome, Jürgen
(86) International application number: PCT/EP2015/056200
(87) International publication number: WO 2015/154987

(56) References cited:
- DE-U1- 9 408 550
- DE-U1- 29 610 663
- DE-U1- 29 722 144
- GB-A- 2 163 946
- US-A- 1 425 996
- US-A- 1 509 390

## Description

### Technical Field

Present invention relates to a curtain wire fastening system onto a window frame, when said curtain wire is intended for hanging a curtain in front of a window.

### Background Art

From the United States patent US1509390 (published on 23.09.1922) a curtain suspension system is known, comprising at both sides of a window frame a mounting bracket formed from wire, where to the mounting bracket an end of a curtain wire or rod for suspending a curtain is attached. A shortcoming of that design is that in use neither said mounting brackets nor the ends of the curtain wire attached to said mounting brackets are covered for safety, meaning that when accidentally coming into contact with said elements a user can get scratched or his clothes might get stuck by a projecting structure part. As a result the whole suspension system could be pulled off from the window frame.

From the German utility model DE202005013937U1 (published on 26.01.2006) a curtain wire fastening system onto a window frame is known, comprising at both ends of the curtain wire a mounting bracket fastened onto the window frame, where one end of the mounting bracket is intended to be fastened behind the corresponding outer lateral edge of the window frame and at the other end of the mounting bracket a fixing element is formed for fastening the end of the curtain wire. A shortcoming of that design is that fastening the ends of the curtain wire to the mounting brackets during installation is rather complicated.

### Disclosure of Invention

The aim of the present invention is to provide a curtain wire fastening system onto a window frame, which is safe to use, meaning that all potentially dangerous projecting elements are covered when in use and that which can be readily installed without special tools. Another aim of the present invention is to provide a possibility to change and/or refresh the appearance of the fastening system.

The present invention provides a curtain wire fastening system onto a window frame, comprising at both ends of the curtain wire an elongated mounting bracket fixed respectively onto the right and left vertical frame part of the window frame, where one end of the mounting bracket is intended to be fastened behind the corresponding outer lateral edge of the window frame and at the other end of the mounting bracket a fixing element is formed for fastening the end of the curtain wire.

Around the end of the mounting bracket comprising the fixing element, a cover element comprising the cavity is placed so that inside said cavity there is placed the end of the elongated mounting bracket comprising a fixing element for fastening the end of the curtain wire and the end of said curtain wire attached to said fixing element.

According to the first embodiment of the present invention the cavity of the cover element is surrounded at least by two end walls and by a mainly cylindrical side wall, wherein said cylindrical side wall comprises two slots, one slot being intended for the end of the mounting bracket and the other slot is intended for the end of the curtain wire, and one of the end walls is formed by a cap fixed onto the cover element.

Instead of the cylindrical side wall, the cross-section of the side wall of the cover element can be also polygonal, oval, square, *etc.*

Preferably the cap is fixed onto the cover element with the help of a snap-fit or an interference fit. The surface of the cap (i.e. the surface, which during use is facing a user) can be raised and the outer shape of the cap can have any desired shape -round, convex, square, polygonal, trapezoid, rectangular, flower-shaped, *etc.*

According to another embodiment of the present invention the cavity of the cover element is surrounded by one end wall and with a mainly cylindrical side wall, where said cylindrical side wall comprises two slots, one for the end of the mounting bracket and the other for the end of the curtain wire.

In the preferred embodiment of the present invention fastening means of said cover element is formed by a groove, where said groove is formed inside the cavity of the cover element into one end wall between two slots in the cylindrical side wall. Said groove is intended to receive the end of the mounting bracket comprising the fixing element.

Preferably the elongated mounting bracket is formed from wire material, one end of which is turned back so that it comprises an end part turned mainly crosswise in respect to the elongated mounting bracket and a tip which is turned at an angle in respect to the end part.

At the other end of the mounting bracket a mainly U-shaped fastening element is formed, where arms of said U-shaped part are mainly crosswise in respect to the elongated part of the mounting bracket and the arm of the U-shaped part connected to the elongated part of the mounting bracket comprises a notch for catching a hook or loop at the end of the curtain wire.

According to the first embodiment of the present invention the cover element is fastened by a groove in the end wall to the mounting bracket so that at least the end of the arm of the U-shaped part connected to the elongated part of the mounting bracket and a part of the elongated mounting bracket are fixed into the groove.

According to the second embodiment of the present invention the cover element is fastened by a groove in the end wall to the mounting bracket so that at least an arc part connecting the arms of the U-shaped part at the end of the mounting bracket is fixed into the groove.

### Brief Description of Drawings

Further the present invention is described in more detail with the help of non-limiting exemplary embodiments with references to the accompanying drawings, where:
Figure 1 shows one side of the fastening system according to the first embodiment of the invention cut perpendicular to the window frame with a cap positioned onto a cover element;
Figure 2 shows a top view of the fastening system according to the first embodiment of the invention without a cap on the cover element;
Figure 3 shows one side of the fastening system according to the second embodiment of the invention cut perpendicular to the window frame through a cover element with a cap;
Figure 4 shows a sectional view through cutline A-A in Figure 3 through cover element of one side of the fastening system according to the second embodiment of the invention;
Figure 5 shows an axonometric view of the cover element according to the invention;
Figure 6 shows the cover element according to Figure 5 as seen from the side of the cavity;
Figure 7 shows the cover element according to Figure 5 as seen from the side of the outer side of the end wall;
Figure 8 shows a side view of the cover element according to Figure 5 as seen from the slot for the curtain wire;
Figure 9 shows a side view of the cover element according to Figure 5 as seen from the slot for the mounting bracket;
Figure 10 represents an axonometric view cut through cutline B-B in Figure 6;
Figure 11 represents an axonometric view cut through cutline C-C in Figure 6;
Figure 12 represents a side view of the cap forming the other end wall of the cover element according to the first embodiment;
Figure 13 represents an axonometric view from below of the cap according to Figure 12;
Figure 14 represents the cap according to Figure 13 before placing it onto the cover element according to Figure 5;
Figure 15 represents the cap according to Figure 13 placed onto the cover element according to Figure 5; and
Figure 16 depicts a mounting bracket according to the invention.

### Mode(s) for Carrying Out the Invention

Next the invention is described in more detail with the help of exemplary embodiments. In drawings in different embodiments the same reference numbers are used for the same elements.

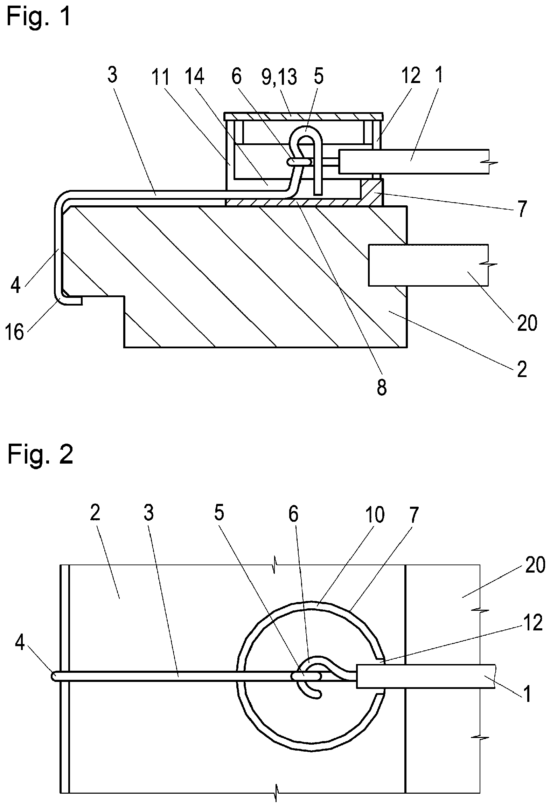

Figures 1 to 4 represent only the part of the curtain wire fastening system onto a window frame which is installed onto the left vertical part of the window frame and from which the curtain wire runs towards the right part of the window frame - it is obvious to the person skilled in the art that the right vertical frame part comprises exactly the same structure of the fastening system, from which the curtain wire runs towards the left part of the window frame. In other words the curtain wire fastening system to be installed onto the window frame have exactly the same design both on the left and on the right. Therefore in drawings only the part of the curtain wire fastening system is represented which is installed onto the left part of the window frame.

The curtain wire 1 fastening system onto a window frame 2 comprises at both ends of the curtain wire an elongated mounting bracket 3 to be installed onto the window frame 2, see Figures 1 to 4 and 16.

One end 4 of the mounting bracket 3 is intended to be fastened behind the corresponding outer lateral edge of the window frame 2. At the other end of the mounting bracket 3 a fixing element 5 is formed for fastening the end 6 of the curtain wire 1.

Around the mounting bracket 3 comprising the fixing element 5, a cover element 7 comprising a cavity is fixed so that the end of the mounting bracket 3 comprising the fixing element 5 and the end 6 of the curtain wire 1 attached to said fixing element 5 is placed inside the cavity of the cover element 7.

According to the first embodiment, the cavity of the cover element 7 is surrounded by two end walls 8, 9 and with a mainly cylindrical side wall 10, whereby said cylindrical side wall 10 comprises two slots 11, 12, one slot being intended for the end of the mounting bracket 3 comprising fixing element 5 and the other slot is intended for the end 6 of the curtain wire 1, and one end wall 9 is formed by a cap 13 fixed onto the cover element, Figures 1, 2, 5 to 15.

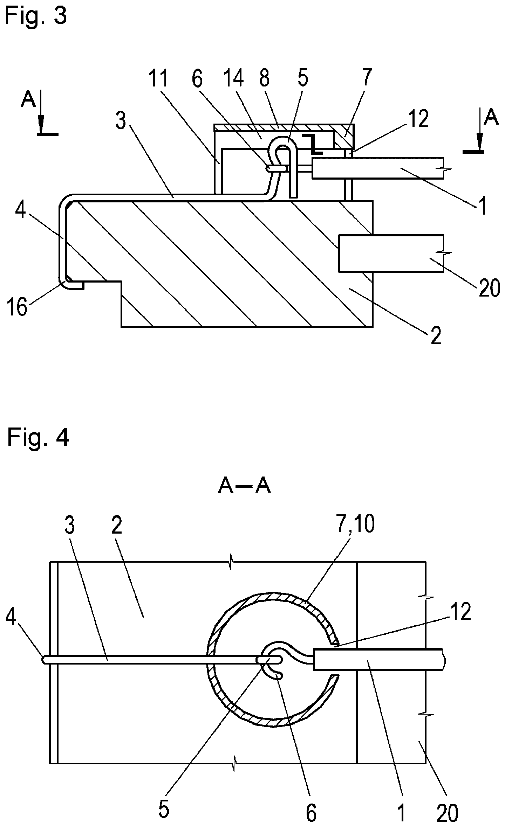

According to the second embodiment the cavity of the cover element 7 is surrounded by one end wall 8 and by the mainly cylindrical side wall 10, where said cylindrical side wall 10 comprises two slots 11, 12, one for the end of the mounting bracket 3 comprising a fixing element 5 and the other for the end 6 of the curtain wire 1, Figures 3 to 11.

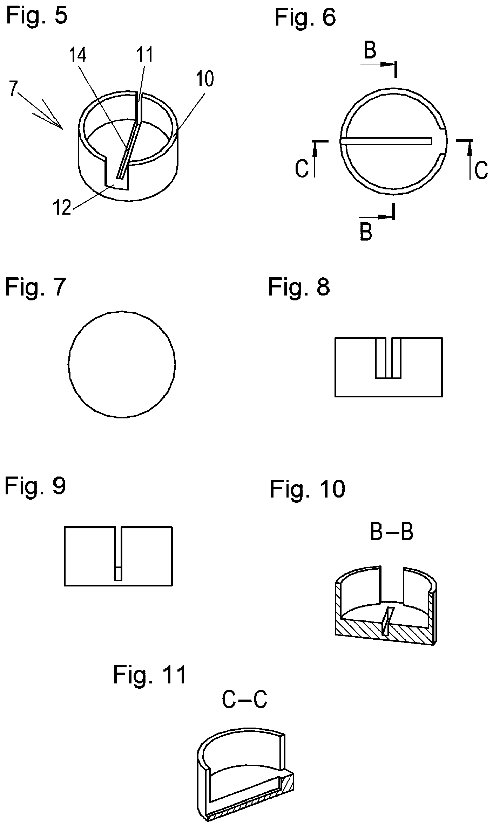

In both embodiments the fastening means of said cover element 7 is formed by a groove 14, when said groove is formed inside the cavity of the cover element 7 into one end wall 8 between two slots 11, 12 in the cylindrical side wall 10 for receiving at least the end of the mounting bracket 3 comprising the fixing element 5, Figure 5 into said groove.

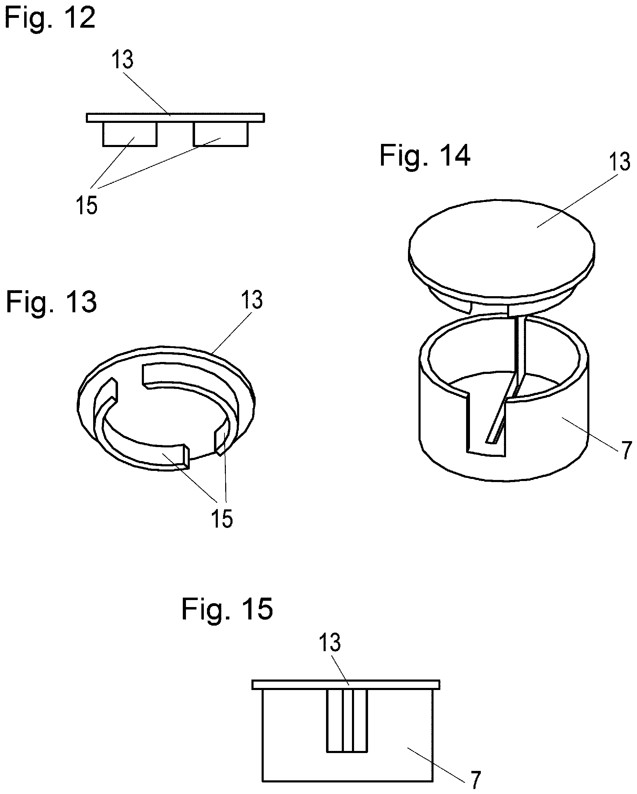

In the embodiment, where the cap 13 forms the other end wall of the cover element 7, said cap 13 is fixed onto the cover element 7 with the help of a snap-fit 15 or an interference fit, Figures 12 to 15.

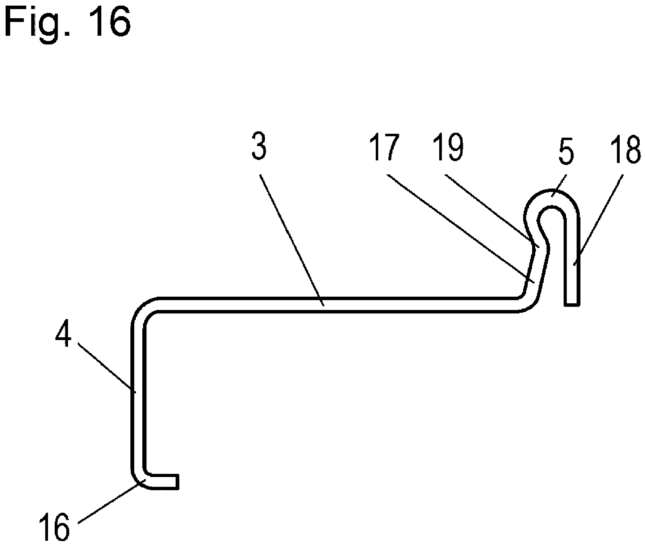

The elongated mounting bracket 3 is formed from wire material, one end of which is turned back so that it comprises an end part 4 turned mainly crosswise in respect to the elongated part of the mounting bracket 3 and a tip 16 which is turned at an angle in respect to the end part 4, Figure 16. At the other end of the elongated mounting bracket 3 a mainly U-shaped fastening element 5 is formed, where arms 17, 18 of said U-shaped part are mainly crosswise in respect to the elongated part of the mounting bracket 3 and the arm 17 of the U-shaped part connected to the elongated part of the mounting bracket 3 comprises a notch 19 for fixing a hook or loop at the end 6 of the curtain wire.

In the preferred embodiment the mounting bracket 3 is made of metal wire. However the mounting bracket can also be made of metal strip, which is also covered with plastic covering.

When installing the curtain wire 1 fastening system onto the window frame 2 according to the first embodiment in front of a glass pane or glass package 20, the end wall 8 of the cover element 7 is placed against the window frame 2, then the mounting bracket 3 comprising the end part 4 with the angled tip 16 is placed behind the outer lateral edge of the window frame 2 and the other end of the mounting bracket 3 is pushed into the groove 14 in the end wall 8 of the cover element 7 so that the mounting bracket 3 extends out from the slot 7 of the cover element 7. The same is carried out on the other side of the window frame, Figures 1 and 2.

Then the end 6 of the curtain wire 1 (which is shown as a hook in the drawing) is fixed in the notch 19 of the fixing element 5 of the mounting bracket 3 so that the curtain wire 1 emerges from the cavity of the cover element 7 through the slot 12. The same is carried out on the other side of the window frame with the other end of the curtain wire (not shown in the drawings).

Thereupon a cap 13 is placed onto the cover element 7, where the cap forms the second end wall 9 of the cover element 7. In the embodiment shown in the drawing, the cap 13 is fixed with a snap-fit 15. But also an interference fit may be used.

When in accordance with the second embodiment installing the curtain wire 1 fastening system onto the window frame 2 in front of a glass pane or a glass package 20, the mounting bracket 3 comprising the end part 4 with the angled tip 16 is placed behind the outer lateral edge of the window frame 2. The same is carried out on the other side of the window frame, Figures 3 and 4.

Then the end 6 of the curtain wire 1 (which is shown as a hook in the drawing) is fixed in the notch 19 of the fixing element 5 of the mounting bracket 3. The same is carried out on the other side of the window frame with the other end of the curtain wire (not shown in the drawings).

Then the cover element 7 comprising the groove 14 in the end wall 8 is pushed onto the fixing element 5 of the mounting bracket 3 so that the mounting bracket 3 extends from the slot 11 and the curtain wire 1 extends from the slot 12. The same is carried out on the other side of the window frame.

In the present embodiment the curtain wire 1 is made of flexible material, such as spirally wound spring wire, which has a plastic coating and which has openings at both ends. A hook or a loop is screwed into those openings forming the end 6 of the curtain wire 1 and which is used to attach the curtain wire to the fixing element 5 of the mounting bracket 3.

The curtain wire may also be braided cable or string, which is stretched by its ends between the fixing elements of the mounting brackets on the left and right vertical parts of the window frame.

It is obvious to the person skilled in the art that within the scope of attached claims the invention may have embodiments other than those described above.

## Claims

1. A curtain wire (1) fastening system onto a window frame (2) comprising at both ends (6) of the curtain wire (1) an elongated mounting bracket (3) fixed respectively onto the right and left vertical frame part of the window frame (2), wherein one end (4) of the mounting bracket (3) is intended to be fastened behind the corresponding outer lateral edge of the window frame (2) and at the other end of the mounting bracket (3) a fixing element (5) is formed for fastening the end (6) of the curtain wire (1), ***characterized by that,*** a cover element (7) comprising a cavity is placed around the end of the mounting bracket (3) comprising the fixing element (5) so that inside said cavity the end of said elongated mounting bracket (3) is located, comprising the fixing element (5) for fastening said end (6) of the curtain wire (1) and said end (6) of the curtain wire (1) attached to said fixing element (5).

2. The curtain wire (1) fastening system according to claim 1, ***characterized by that,*** the cavity of the cover element (7) is surrounded at least by two end walls (8, 9) and by a mainly cylindrical side wall (10), wherein said cylindrical side wall (10) comprises two slots (11, 12), one of them for the end of the mounting bracket (3) and the other for the end (6) of the curtain wire (1), and one of the end walls (9) is formed by a cap (13) fixed onto the cover element (7).

3. The curtain wire (1) fastening system according to claim 2, ***characterized by that,*** the cap (13) is fixed onto the cover element (7) with the help of a snap-fit or an interference fit.

4. The curtain wire (1) fastening system according to claim 1, ***characterized by that,*** the cavity of the cover element (7) is surrounded by one end wall (8) and by a mainly cylindrical side wall (10), wherein said cylindrical side wall (10) comprises two slots (11, 12), one for the end of the mounting bracket (3) and the other for the end (6) of the curtain wire (1).

5. The curtain wire (1) fastening system according to any one of the preceding claims, ***characterized by that,*** fastening means of said cover element (7) is formed by a groove (14), wherein said groove (14) is formed inside the cavity of the cover element (7) into one end wall (8) between two slots (11, 12) in the cylindrical side wall (10) to receive the end of the mounting bracket (3) comprising the fixing element (5).

6. The curtain wire (1) fastening system according to claim 1, ***characterized by that,*** the elongated mounting bracket (3) is formed from wire material, where one end of the wire (1) is turned back so that it comprises the end part (4) turned mainly crosswise in respect to the elongated mounting bracket (3) and a tip (16) which is turned at an angle in respect to the end part (4) and at the other end of the mounting bracket (3) a mainly U-shaped fastening element (5) is formed, where arms (17, 18) of said U-shaped part are mainly crosswise in respect to the elongated part of the mounting bracket (3) and the arm (17) of the U-shaped part connected to the elongated part of the mounting bracket (3) comprises a notch (19) for catching a hook or a loop at the end (6) of the curtain wire (1).

7. The curtain wire (1) fastening system according to claims 4, 5 and 6, ***characterized by that,*** the cover element (7) is fastened by the groove (14) in the end wall (8) to the mounting bracket (3) so that at least an arc part (5) connecting arms (17, 18) of the U-shaped part at the end of the mounting bracket (3) are fixed into the groove (14).

8. The curtain wire (1) fastening system according to claims 2, 5 and 6, ***characterized by that,*** the cover element (7) is fastened by the groove (14) in the end wall (8) to the mounting bracket (3) so that at least the end of the arm (18) of the U-shaped part connected to the elongated part of the mounting bracket (3) and part of the elongated mounting bracket (3) are fixed into the groove (14).

## Patentansprüche

1. Ein Vorhangdrahtbefestigungssystem (1) eines Fensterrahmens (2), welches beide Enden (6) des Gardinendrahtes (1), eine verlängerte Befestigungsklammer (3), welche jeweils auf dem rechten und linken vertikalen Teil des Fensterrahmens (2) befestigt sind, umfasst, wobei das Anbringen eines Endes (4) der Befestigungsklammer (3) hinter der entsprechenden äußeren Kante des Fensterrahmens (2) vorgenommen werden muss und am anderen Ende der Befestigungsklammer (3) ist ein Befestigungselement (5) für das Spannen des Endes (6) des Gardinendrahtes (1), ***dadurch gekennzeichnet, dass*** ein Deckelement (7) das ein Loch enthält um das Ende der Befestigungsklammer (3), das das Befestigungselement (5) umfasst, so montiert ist, dass innerhalb des benannten Loches das Ende der benannten verlängerten Befestigungsklammer (3) montiert ist, welches das Befestigungselement (5) für das Spannen des genannten Endes (6) des Gardinendrahtes (1) und das genannte Ende (6) des Gardinendrahtes (1) an genanntes Befestigungselement (5) befestigt.

2. Das Vorhangdrahtbefestigungssystem (1) gemäß Anspruch 1, ***dadurch gekennzeichnet, dass*** die Aushöhlung des Deckelementes (7) mindestens von zwei Endwänden (8, 9) und von einer hauptsächlich zylindrischen Seitenwand (10) umgeben ist, wobei die benannte zylindrische Seitenwand (10) zwei Aussparungen (11, 12) umfasst, eine davon für das Ende der Befestigungsklammer (3) und die andere für das Ende (6) des Gardinendrahtes (1), und eine der Endwände (9) ist durch eine Kappe (13) geformt, die an das Deckelement (7) befestigt ist.

3. Das Vorhangdrahtbefestigungssystem (1) gemäß Anspruch 2, ***dadurch gekennzeichnet, dass*** die Kappe (13) an das Deckelement (7) mit der Hilfe eines Schnappverschlusses und einer Presspassung befestigt ist.

4. Das Vorhangdrahtbefestigungssystem (1), gemäß Anspruch 1, ***dadurch gekennzeichnet, dass*** die Aushöhlung der Deckelementes (7) von einer Seitenwand (8) und von einer hauptsächlich zylindrischen Seitenwand (10) umgeben ist, wobei die genannte zylindrische Seitenwand (10) zwei Aussparungen (11, 12) umfasst, eine für das Ende der Befestigungsklammer (3) und die andere für das Ende (6) des Gardinendrahtes (1).

5. Das Vorhangdrahtbefestigungssystem gemäß einem der vorangehenden Ansprüche, ***dadurch gekennzeichnet, dass*** die Spannungsweise des genannte Deckelementes (7) von einer Rille (14) geformt ist, wobei die genannte Rille (14) innerhalb einer Aussparung des Deckelementes (7) in eine Endwand (8) zwischen den zwei Aussparungen (11, 12) in der zylindrischen Seitendwand (10) geformt ist, um das Ende der Befestigungsklammer (3) das das Befestigungselement (5) umfasst, zu erhalten.

6. Das Vorhangdrahtbefestigungssystem (1) gemäß Anspruch 1, ***dadurch gekennzeichnet, dass*** die verlängerte Befestigungsklammer (3) durch ein Drahtmaterial geformt ist, bei dem ein Ende des Drahtes so zurückgeschwungen ist, dass es das Endteil (4), das hauptsächlich im rechten Winkel zur verlängerten Befestigungsklammer (3) gebeugt ist, und eine Spitze (16), die einen Winkel zum Endteil (4) formt, umfasst, und am anderen Ende der Befestigungsklammer (3) ein hauptsächlich U-förmiges Befestigungselement (5) formt, wo die Arme (17, 18) des genannten U-förmigen Teils hauptsächlich im rechten Winkel zum verlängerten Teil der Befestigungsklammer (3) gebeugt sind und der Arm (17) des U-förmigen Teils, die mit dem verlängerten Teil der Befestigungsklammer (3) verbunden ist, eine Einbuchtung (19) für das Spannen eines Hakens oder Ringes am Ende (6) des Gardinendrahtes (1) hat.

7. Das Vorhangdrahtbefestigungssystem (1) gemäß der Ansprüche 4, 5 und 6, ***dadurch gekennzeichnet, dass*** das Deckelement (7) durch die Rille (14) an der Endwand (8) an der Befestigungsklammer (3) so befestigt ist, dass mindestens das Kurvenstück (5), die die Arme (17, 18) des U-förmigen Befestigungselements (5) am Ende der Befestigungsklammer (3) verbindet, in dessen Rille (14) fixiert ist.

8. Das Vorhangdrahtbefestigungssystem gemäß Ansprüche 2, 5 und 6, ***dadurch gekennzeichnet, dass*** das Deckelement (7) durch die Rille (14) an der Endwand (8) an die Befestigungsklammer (3) so befestigt ist, dass mindestens das Ende des Arms (18) des U-förmigen Befestigungselements (5), das mit dem verlängerten Teil der Befestigungsklammer (3) verbunden ist, und ein Teil der verlängerten Befestigungsklammer (3) in der Rille (14) fixiert sind.

## Revendications

1. Système de fixation de câble (1) pour rideaux sur un encadrement (2) de fenêtre comprenant aux deux extrémités (6) du câble (1) pour rideaux un support de fixation allongé (3) fixé respectivement sur la partie verticale droite et gauche de l'encadrement (2) de fenêtre, dans lequel une extrémité (4) du support de fixation (3) est destinée à être fixée derrière le bord latéral externe correspondant de l'encadrement (2) de fenêtre et à l'autre extrémité du support de fixation (3) un élément de fixation (5) est formé pour fixer l'extrémité (6) du câble (1) pour rideaux, ***caractérisé en ce qu'***un élément de recouvrement (7) comprenant une cavité est placé autour de l'extrémité du support de fixation (3) comprenant l'élément de fixation (5) de sorte que l'extrémité dudit support de fixation allongé (3) est située à l'intérieur de la dite cavité, comprenant l'élément de fixation (5) pour fixer la dite extrémité (6) du câble (1) pour rideaux et la dite extrémité (6) du câble (1) pour rideaux fixé au dit élément de fixation (5).

2. Système de fixation de câble (1) pour rideaux selon la revendication 1, ***caractérisé en ce que*** la cavité de l'élément de recouvrement (7) est entourée au moins par deux parois d'extrémité (8, 9) et par une paroi latérale (10) principalement cylindrique, dans lequel la dite paroi latérale cylindrique (10) comprend deux fentes (11, 12), l'un pour l'extrémité du support de fixation (3) et l'autre pour l'extrémité (6) du câble (1) pour rideaux, et l'une des parois d'extrémité (9) est formée par un capuchon (13) fixé sur l'élément de recouvrement (7).

3. Système de fixation de câble (1) pour rideaux selon la revendication 2, ***caractérisé en ce que*** le capuchon (13) est fixé sur l'élément de recouvrement (7) à l'aide d'un ajustement par encliquetage ou par un ajustement serré.

4. Système de fixation de câble (1) pour rideaux selon la revendication 1, ***caractérisé en ce que*** la cavité de l'élément de recouvrement (7) est entourée par une paroi d'extrémité (8) et par une paroi latérale (10) essentiellement cylindrique, dans lequel la dite paroi latérale cylindrique (10) comprend deux fentes (11, 12), un pour l'extrémité du support de fixation (3) et l'autre pour l'extrémité (6) du câble (1) pour rideaux.

5. Système de fixation de câble (1) pour rideaux selon l'une quelconque des Revendications précédentes, ***caractérisé en ce que*** les moyens de fixation du dit élément de recouvrement (7) sont formés par une rainure (14), dans lequel la dite rainure (14) est formée à l'intérieur de la cavité de l'élément de recouvrement (7) dans une paroi d'extrémité (8) entre deux fentes (11, 12) dans la paroi latérale cylindrique (10) pour recevoir l'extrémité de support de fixation (3) comprenant l'élément de fixation (5).

6. Système de fixation de câble (1) pour rideaux selon la revendication 1, ***caractérisé en ce que*** le support de fixation allongé (3) est formé d'un matériel en fil, où une extrémité du fil est retournée de sorte qu'elle comprend la partie d'extrémité (4) tournée principalement transversalement par rapport au support de fixation allongé (3) et une pointe (16) qui est tournée en angle par rapport à la partie d'extrémité (4) et à l'autre extrémité du support de fixation (3) un élément de fixation (5) en forme de U est formé, où les bras (17, 18) de la dite partie en forme de U sont principalement transversaux par rapport à la partie allongée du support de fixation (3) et le bras (17) de la partie en U relié à la partie allongée du support de fixation (3) comprend une encoche (19) pour attraper un crochet ou une boucle à l'extrémité (6) du câble (1) pour rideaux.

7. Système de fixation de câble (1) pour rideaux selon les revendications 4, 5 et 6, ***caractérisé en ce que*** l'élément de recouvrement (7) est fixé par la rainure (14) dans la paroi d'extrémité (8) à la support de fixation (3) de sorte qu'au moins une partie d'arc (5) reliant les bras (17, 18) de la partie en U à l'extrémité du support de fixation (3) est fixée dans la rainure (14).

8. Système de fixation de câble (1) pour rideaux selon les revendications 2, 5 et 6, ***caractérisé en ce que*** l'élément de recouvrement (7) est fixé par la rainure (14) dans la paroi d'extrémité (8) à la support de fixation (3) de sorte qu'au moins l'extrémité du bras (18) reliée à la partie allongée du support de fixation (3) de l'élément de fixation en U (5) à l'extrémité de support de fixation (3) et une partie de la partie allongée du support de fixation (3) sont fixées dans la rainure (14).
